# EUROPEAN PATENT SPECIFICATION

(11) **EP 2 041 528 B1**
(45) Date of publication and mention of the grant of the patent: **30.12.2020**
(21) Application number: 07748324.6
(22) Date of filing: 09.07.2007
(51) Int. Cl.: G01F 23/296

(54) **LIQUID LEVEL MEASUREMENT DEVICE**
FLÜSSIGKEITSSTAND-MESSEINRICHTUNG
DISPOSITIF DE MESURE DU NIVEAU D'UN LIQUIDE

(30) Priority: 12.07.2006 SE 0601547
(43) Date of publication of application: 01.04.2009
(73) Proprietor: Axsensor AB, 411 25 Göteborg (SE)
(72) Inventor: BOSTRÖM, Jan, S-413 05 Göteborg (SE)
(74) Representative: AWA Sweden AB
(86) International application number: PCT/SE2007/000671
(87) International publication number: WO 2008/008018

(56) References cited:
- EP-A1- 0 435 488
- WO-A1-96/10734
- WO-A1-2005/038415
- WO-A1-2005/038415
- DE-A1- 4 201 037
- FR-A- 1 431 530
- GB-A- 2 164 151

## Description

### Technical field

The present invention relates to a fuel level measurement device. In particular, the present invention relates to a device for providing a temperature compensated measurement of the level of a fuel in a tank. The present invention also relates to a method for providing a temperature compensated measurement of the level of a fuel in a tank.

### Technical background

An example of a liquid level measurement device is disclosed in the document WO2005038415. The device comprises a transducer arranged outside the liquid for transmitting and receiving acoustic signals, and a waveguide connected to the transducer and extending into the liquid. In the basic operation of the device, an acoustic signal is transmitted from the transducer into the waveguide, which signal is reflected by the surface of the liquid into which the waveguide extends. By knowing the transit time and the velocity of the signal, it is possible to calculate the liquid level.

It in a known fact that the velocity of acoustic signals is dependent on for example temperature, which may render the measurement erroneous. To this end, the device in WO2005038415 comprises a reference system, wherein the acoustic signal travels a known distance in order to determine the current speed of sound, whereby the current speed of sound is used to calculate the liquid level.

However, for example when the liquid level is low, there may be a significant temperature difference throughout the measurement device, making the measurement erroneous. This even though a reference system is used, since the temperature in the reference system may differ from that of other parts of the measurement device.

### Summary of the invention

It is an object of the present invention to overcome this problem, and to provide a fuel level measurement device with improved temperature compensation.

This and other objects that will be evident from the following description is achieved by a device for providing a temperature compensated measurement of the level of a fuel in a tank, and a corresponding method, according to the appended claims.

By having means for directing the flow of fuel originating from the tank along the exterior of a portion of the waveguide which is located above the fuel level, the temperature becomes essentially the same throughout the whole of the waveguide, whereby the level measurement using the speed of sound in the waveguide, which speed is temperature dependant, becomes very accurate.

It should be noted that WO2005038415 discloses a device comprising means for feeding a flow of fluid originating from the tank into the portion of the waveguide which is located above the liquid level. The purpose of this is to provide a gas composition compensated measurement. However, in some instances, only the temperature is of interest, whereby it is much more convenient from a construction and cost point of view to provide the liquid along *the exterior* of the waveguide than *inside* the waveguide. The latter requires for instance an aperture for feeding fluid into the waveguide as well as drainage facilities.

According to the invention, the directing means is a suction and/or return pipe of a fuel pump associated with the tank. At least part of the waveguige is arranged alongside the suction and/or return pipe so that the temperature of the latter can be transferred to
the former. In another example, part of the waveguide is accommodated in a housing and the suction and/or return pipe runs adjacent to or through the housing, again for transferring the temperature from the suction and/or return pipe to the waveguide. Further, the waveguide and the suction and/or return pipe can be integrated to a single structure, which facilitates manufacturing and assembly and lowers cost. Here, the fuel pump advantageously provides the flow of fuel from the tank. An advantage with using the suction and/or return pipe of the fuel pump is that no additional dedicated means for directing the fuel flow is necessary, which lowers cost.

The above measurement device is particularly useful in case the fuel to be measured is diesel, since temperature is the predominant factor to consider for diesel. Gas composition compensation is not that relevant because diesel does not evaporate to such a large extent as for example gasoline or petrol.

According to another aspect of the invention, there is provided a method for providing a temperature compensated measurement of the level of a fuel in a tank according to claim 5.

This aspect exhibits similar advantages as the previously discussed aspect of the invention.

According to yet another aspect of the invention, there is provided a tank arrangement, comprising: a tank, and a device according to the above discussion. This aspect exhibits similar advantages as the previously discussed aspects of the invention.

### Brief description of the drawings

These and other aspects of the present invention will now be described in more detail, with reference to the appended drawings showing currently preferred embodiments of the invention.
Fig. 1a is a schematic side view of a fuel tank with a measurement device according to an embodiment of the present invention,
Fig. 1b is an enlarged schematic partial perspective view of the measurement device of fig. 1a,
Fig. 2a is a schematic perspective view of a measurement device according to another embodiment which does not form part of the present invention, which measurement device is arranged in a saddle tank,
Fig. 2b is a schematic side view of the saddle tank and measurement device of fig. 2a, and
Fig. 2c is a variant of the saddle tank and measurement device of figs. 2a-2b.

### Detailed description of currently preferred embodiments

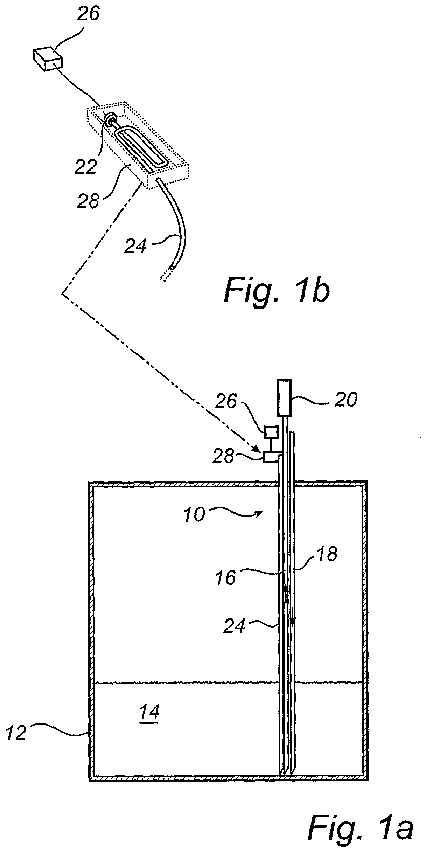

Fig. 1a is a schematic side view of a tank 12 with a measurement device 10 according to an embodiment of the present invention. The tank 12 can be a fuel tank for a vehicle, such as a car, a truck or a boat, and the measurement device 10 is adapted to detect the level of fuel 14 in the tank 12.

In the tank 12, except for the measurement device 10, there is provided a suction pipe 16 and a return pipe 18. The suction pipe 16 is connected to a fuel pump 20 placed outside the tank 12, while the return pipe 18 is connected to a fuel return system (not shown) also placed outside the tank 12. The suction pipe 16 and the return pipe 18 may be integrated to a single structure.

Upon operation, fuel 14 from the tank 12 is sucked up by the fuel pump 20 via the suction pipe 16, while excessive or "unused" fuel is returned to the tank 12 via the return pipe 18, according to known techniques. Thus, during operation, a flow of fuel is provided in both the suction pipe 16 and the return pipe 18 by the fuel pump 20 and the fuel return system, respectively.

The structure and operation of the measurement device 10 will now be described with reference to figs. 1a and 1b. The measurement device 10 comprises a transducer 22 and a waveguide 24 connected to the transducer 22. In fig. 1a, the transducer 22 is placed outside the tank 12, but it could alternatively be placed inside at the top of the tank 12. The transducer 22 is furhter arranged in connection with an electronic control device 26, which also is placed outside the tank 12. Further, the transducer 22 may be a combined unit, or comprise a separate transmitter and receiver, e.g.

The waveguide 24 extends from the transducer 22 down to the bottom of the tank 12, into the fuel 14. More precisely, according to the present embodiment of the invention, the waveguide 24 is arranged along side the suction pipe 16 and/or the return pipe 18. The waveguide 24 and at least one of the suction pipe 16 and the return pipe 18 may be placed in contact with each other (as in fig. 1a) and they may even be integrated to a single structure. Also, the waveguide 24 and at least one of the suction pipe 16 and the return pipe 18 may be enclosed by a common elongated housing pipe (not shown). Further, the portion of the waveguide 24 close to the transducer 22 having a flat spiral shape, or any housing 28 accommodating said portion, should be positioned close to or in contact with the suction pipe 16 and/or the return pipe 18. Alternatively, the suction pipe 16 and/or the return pipe 18 could run through the housing 28 (not shown).

Upon operation of the measurement device 10, the electronic control device 26 energizes the transducer 22 to generate acoustic pulses. A pulse transmitted from the transducer 22 is guided through the waveguide 24 towards the surface of the fuel 14 in the tank 12, which pulse travels through the waveguide 24, is then reflected by the surface, and finally returns to the transducer 22. In response to the returning pulse, the transducer 22 generate corresponding a signal to the control device 26. By knowing the the transit time and velocity of the pulse, the control device 26 can calculate the fuel level or fuel volume in the tank 12. To increase the accuracy of the measurements, the measurement device 10 can futher comprise a reference system (not shown). For instance, a reference element could be provided in the waveguide, preferably just after the the spiral portion and above the highest possible fuel level, creating a reference portion of the waveguide between the tranducer and the reference element. An example of such a reference system and more is described in the above mentioned document WO2005038415, the content of which hereby is incorporated by reference.

Further, since they are arranged adjacent to each other, the flow of fuel in the suction pipe 16 and the return pipe 18 is directed along the exterior of the waveguide 24. This, and the fact that the housing 28 also is arranged adjacent to the suction pipe 16 and the return pipe 18, allows "the temperature" of the fuel in the suction pipe 16 and the return pipe 18 to be transferred to a portion of the waveguide 24 which is located above the fuel level, which levels the conditions throughout the waveguide 24 with respect to temperature, which in turn allows more accurate measurements since the velocity of the acoustic pulses (which depends on temperature) becomes essentially the same throughout the waveguide 24 located above the main fuel level. The flow of fuel originating from the tank may come directly from the tank 12 (in the case with the suction pipe 16), or indirectly via a fuel return system (in the case with the return pipe 18), for example.

The measurement device according to the present invention is particularly useful in case the fuel to be measured is diesel, since temperature is the predominant factor to consider for diesel. Gas composition, which also may affect the pulse velocity, is not that relevant because diesel does not evaporate to such a large extent as for example gasoline or petrol.

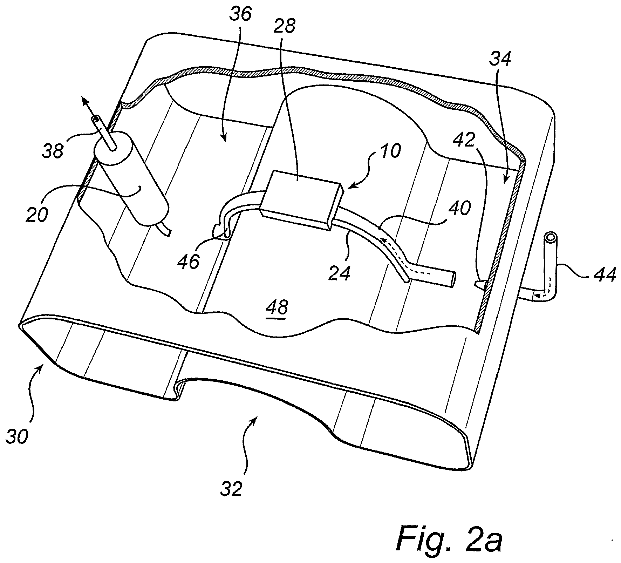

Figs. 2a-2c illustrate a measurement device 10 according to another embodiment which does not form part of the present invention, which measurement device here is arranged in a saddle tank 30.

The saddle tank has an indentation 32 at its bottom forming a first section 34 and a second section 36. The indentation is usually for passage of the vehicle's drive shaft (not shown). The fuel pump 20 is arranged in the second section 36, and it is adapted to pump fuel out of the tank via a feed pipe 38. Alternatively, the fuel pump could be placed outside the tank. Additionally, an ejector system is provided for transferring any fuel left in the first section 34 to the fuel pump 20.

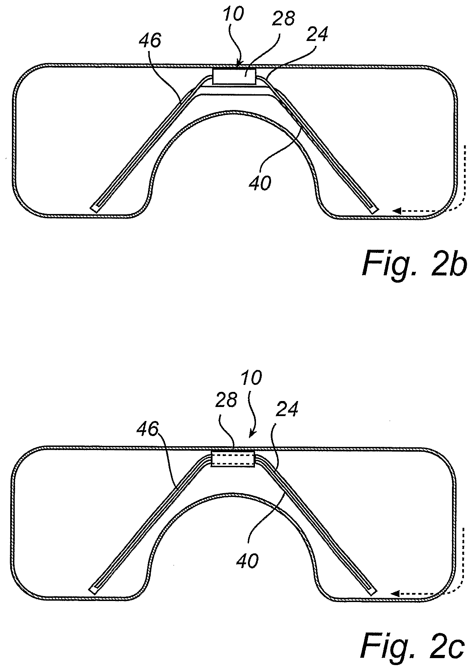

The exemplary ejector system in fig. 2 comprises a first transportation pipe 40 extending from the first section 34 to the second section 36, and a second transportation pipe 44. In fig. 2, the second transportation pipe 44 is a fuel return pipe which returns excessive fuel from a fuel return system (not shown) placed outside the tank 30, and it ends with a nozzle 42 aimed towards the entrance of the first transportation pipe 40 in the first section 34.

The ejector system operates in accordance with the known principle of suction jet. Upon operation of the ejector system, fuel is fed from the fuel return system via the second transportation pipe 44 to the nozzle 42. At the nozzle 42, a suction pressure is produced in a known manner, causing fuel in the first section 34 to be transferred via the first transportation pipe 40 to the second section 36, where it can be pumped out of the tank 30 by the fuel pump 20. Thus, during operation, a flow of fuel is provided by the ejector system in the transportation pipe 40.

The measurement device 10 in figs. 2a-2c is similar to that of figs. 1a and 1b, but includes additionally a second waveguide 46. The second waveguide 46 can be connected to the transducer 22 (shown in fig. 1b) or to its own transducer (not shown) and extends into one section 36 of the saddle tank 30, while the first waveguide 24 extends into the other section 34 of the saddle tank 30. More precisely, the waveguides 24, 46 are arranged along side the first transportation pipe 40. The waveguides 24, 46 and the transportation pipe 40 may even be integrated to a single structure, so that the waveguides 24, 46 are in contact with the transportation pipe 40. Also, the waveguides 24, 46 and the transportation pipe 40 could be enclosed by a common elongated housing (not shown). Further, the spiral portions of the waveguides 24, 46, or any housing 28 accommodating said portions, should be positioned close to or in contact with the transportation pipe 40, at the top of the tank 30 in a narrow passage 48 above the indentation 32 between the sections 34, 36, as illustrated in fig. 2b. Alternatively, the transportation pipe 40 could run through the housing 28, as illustrated in fig. 2c. The housing 28 may also be integrated with the waveguides 24, 46 and the transportation pipe 40 to form a single structure.

Upon operation, the measurement device 10 in fig. 2 functions similar to that of figs. 1a and 1b, but due to the two waveguides 24, 46 it provides two measurements, one for each section 34, 36 of the saddle tank 30, whereby the overall measure of the level of fuel 14 in the tank 30 advantagsously is the average of the two measurements. Further, since they are arranged adjacent to each other, the flow of fuel in the transportation pipe 40 is directed along the exterior of the waveguides 24, 46. This allows "the temperature" of the fuel in the transportation pipe 40 to be transferred to portions of the waveguides 24, 46 which are located above the fuel level, which levels the conditions throughout the waveguides 24, 46 with respect to temperature, which in turn allows more accurate measurements since the velocity of the pulses (which depends on temperature) becomes essentially the same throughout the waveguides 24, 46 located above the main fuel level.

The measurement device according to the invention using two waveguides is also advantageous in that only a single opening to the saddle tank is necessary. With the setup of figs. 2a-2c, only the waveguide 24 extends into the first section 34 via the narrow passage 48. The likelihood that the waveguide will malfunction is very small, and even if it should, it is a relatively easy operation to insert a new waveguide into the first section via the narrow passage from the opening at the fuel pump side of the tank. This should be compared to a case where a traditional float measurement device is arranged in the first section. To be able to repair the float in case of malfunction, an additional opening in the tank at the first section for accessing said section to reach the float is required.

Also, in the manufacturing, a so called "ship-in-a-bottle" (SIB) technique may advantageously be used, wherein the tank is formed around the measurement device (and any other tank components, such as the fuel pump, parts of the ejector system, etc.). A plastic fuel tank may for example be blow moulded to encompass the measurement device and any other tank components.

The person skilled in the art realizes that the present invention by no means is limited to the preferred embodiments described above. On the contrary, many modifications and variations are possible within the scope of the appended claims. For example, the above ejector system can be designed in various ways within the scope of the present invention. For example, instead of being a fuel return pipe which returns excessive fuel, the second transportation pipe can be branched directly from the feed pipe and run inside the tank to the nozzle. Such a second transportation pipe could also be used as the directing means. For example, it could be arranged so as to pass through the housing accommodating the spiral portions of the waveguides. Also, instead of being arranged in the first section, the nozzle can be arranged at the first transportation pipe in the second section of the saddle tank. Suitable ejector systems which can be used in conjunction with the present invention are disclosed in the documents US5941279, DE19955133, DE4201037, and EP0864458, for example.

Further, although acoustic pulses have been used in the described embodiments, the inventive measurement device may also be used with other measurement modes such as standing wave measurement.

Further, instead of the suction/return or transportations pipe, a dedicated pipe could be used. Also, a dedicated device such as a pump could be used to provide the flow of liquid from the tank.

## Claims

1. A device (10) for providing a temperature compensated measurement of the level of a fuel (14) in a tank (12; 30), comprising:
a transducer (22) for transmitting and receiving acoustic signals, and
a waveguide (24) connected to the transducer and adapted to extend into the liquid,
wherein the waveguide is configured to guide an acoustic pulse generated by the transducer (22) towards a surface of the fuel, and to guide a returning pulse reflected by the surface back to the transducer (22),
**characterized by**:
means (16; 18; 40) for directing a flow of fuel originating from the tank along the exterior of a portion of the waveguide which during operation is located above the fuel level,
wherein said means comprises a suction pipe (16) for sucking fuel up from the tank by means of a fuel pump (20) and/or a return pipe (18) for returning unused fuel to the tank,
at least part of said waveguide (24) being arranged alongside and in contact with said suction pipe (16) and/or said return pipe (18).

2. A device according to claim 1, wherein part of the waveguide is accommodated in a housing (28), and wherein the suction pipe (16) and/or return pipe (18) runs adjacent to or through the housing.

3. A device according to claim 1 or 2, wherein the waveguide and the suction and/or return pipe are integrated to a single structure.

4. A device according to claim 1, wherein the fuel is diesel.

5. A method for providing a temperature compensated measurement of the level of a fuel (14) in a tank (12; 30), comprising:
transmitting an acoustic signal from a transducer (22) into a waveguide (24) adapted to extend into the liquid,
guiding, in the waveguide, the acoustic pulse towards a surface of the fuel,
receiving a reflected acoustic signal to the transducer from the waveguide,
**characterized by**:
directing a flow of fuel originating from the tank along the exterior of a portion of the waveguide which during operation is located above the fuel level,
wherein said flow of fuel occurs in a suction pipe (16) for sucking fuel up from the tank by means of a fuel pump (20) and/or a return pipe (18) for returning unused fuel to the tank.

6. A tank arrangement, comprising:
a tank (12; 30), and
a device according to any one of the claims 1-4.

## Patentansprüche

1. Vorrichtung (10) zum Bereitstellen einer temperaturkompensierten Messung des Füllstands eines Kraftstoffs (14) in einem Tank (12; 30), umfassend:
einen Wandler (22) zum Senden und Empfangen von akustischen Signalen und
einen Wellenleiter (24) der an den Wandler angeschlossenen und
angepasst ist, um sich in die Flüssigkeit hinein zu erstrecken,
wobei der Wellenleiter konfiguriert ist, um einen durch den Wandler (22) erzeugten akustischen Impuls in Richtung einer Oberfläche des Kraftstoffs, und um einen von der Oberfläche reflektierten Rückimpuls zurück zum Wandler (22) zu leiten,
**gekennzeichnet durch**:
Mittel (16; 18; 40) zum Lenken eines Kraftstoffstroms, der aus dem Tank stammt, entlang der Außenseite eines Teils des Wellenleiters,
der sich während des Betriebs über dem Kraftstoffspiegel befindet,
wobei das Mittel ein Saugrohr (16) zum Ansaugen von Kraftstoff aus dem Tank mittels einer Kraftstoffpumpe (20) umfasst und / oder
ein Rücklaufrohr (18) zur Rückführung von nicht verwendetem Kraftstoff in den Tank,
mindestens ein Teil des Wellenleiters (24) ist neben und in Kontakt mit dem Saugrohr (16) und / oder dem Rücklaufrohr (18) angeordnet.

2. Vorrichtung nach Anspruch 1, wobei ein Teil des Wellenleiters in einem Gehäuse (28) untergebracht ist, und wobei das Saugrohr (16) und / oder das Rücklaufrohr (18) neben dem Gehäuse oder durch das Gehäuse verläuft.

3. Vorrichtung nach Anspruch 1 oder 2, wobei der Wellenleiter und das Saug- und / oder Rücklaufrohr in einer Struktur integriert sind.

4. Vorrichtung nach Anspruch 1, wobei der Kraftstoff Diesel ist.

5. Verfahren zum Bereitstellen einer temperaturkompensierten Messung des Füllstands eines Kraftstoffs (14) in einem Tank (12; 30), umfassend:
Übertragen eines akustischen Signals von einem Wandler (22) in einen Wellenleiter (24), der so angepasst ist, dass er sich in die Flüssigkeit erstreckt
Leiten des akustischen Impulses im Wellenleiter zu einer Oberfläche des Kraftstoffs,
Empfangen eines reflektierten akustischen Signals an dem Wandler des Wellenleiters,
**gekennzeichnet durch**:
Lenken eines aus dem Tank stammenden Kraftstoffstroms entlang der Außenseite eines Teils des Wellenleiters, der sich während des Betriebs über dem Kraftstoffspiegel befindet,
wobei sich der Kraftstoffstrom in einem Saugrohr (16) zum Ansaugen von Kraftstoff aus dem Tank mittels einer Kraftstoffpumpe (20) ereignet und / oder einem Rücklaufrohr (18) zum Zurückführen von nicht verwendetem Kraftstoff in den Tank.

6. Tankanordnung, umfassend:
einen Tank (12; 30) und
eine Vorrichtung nach einem der Ansprüche 1 bis 4.

## Revendications

1. Dispositif (10) pour fournir une mesure compensée en température du niveau d'un carburant (14) dans un réservoir (12 ; 30), comprenant :
un transducteur (22) pour transmettre et recevoir des signaux acoustiques, et
un guide d'ondes (24) connecté au transducteur et adapté pour s'étendre dans le liquide,
dans lequel le guide d'ondes est configuré pour guider une impulsion acoustique générée par le transducteur (22) vers une surface du carburant, et pour guider une impulsion de retour réfléchie par la surface vers le transducteur (22),
**caractérisé par** :
des moyens (16 ; 18 ; 40) pour diriger un flux de carburant provenant du réservoir le long de l'extérieur d'une partie du guide d'ondes qui lors du fonctionnement est située au-dessus du niveau de carburant,
dans lequel lesdits moyens comprennent un tuyau d'aspiration (16) pour aspirer du carburant du réservoir au moyen d'une pompe à carburant (20) et/ou un tuyau de retour (18) pour renvoyer du carburant inutilisé vers le réservoir,
au moins une partie dudit guide d'ondes (24) étant disposée le long de et en contact avec ledit tuyau d'aspiration (16) et/ou ledit tuyau de retour (18).

2. Dispositif selon la revendication 1, dans lequel une partie du guide d'ondes est logée dans un boîtier (28), et dans lequel le tuyau d'aspiration (16) et/ou le tuyau de retour (18) passe à côté ou à travers le boîtier.

3. Dispositif selon la revendication 1 ou 2, dans lequel le guide d'ondes et le tuyau d'aspiration et/ou de retour sont intégrés en une seule structure.

4. Dispositif selon la revendication 1, dans lequel le carburant est du diesel.

5. Procédé pour fournir une mesure compensée en température du niveau d'un carburant (14) dans un réservoir (12 ; 30), comprenant :
transmettre un signal acoustique depuis un transducteur (22) dans un guide d'ondes (24) adapté pour s'étendre dans le liquide,
guider, dans le guide d'ondes, l'impulsion acoustique vers une surface du carburant,
recevoir un signal acoustique réfléchi vers le transducteur à partir du guide d'ondes,
**caractérisé par** :
diriger un flux de carburant provenant du réservoir le long de l'extérieur d'une partie du guide d'ondes qui lors du fonctionnement est située au-dessus du niveau de carburant,
dans lequel ledit flux de carburant se produit dans un tuyau d'aspiration (16) pour aspirer du carburant du réservoir au moyen d'une pompe à carburant (20) et/ou d'un tuyau de retour (18) pour renvoyer du carburant inutilisé vers le réservoir.

6. Un agencement de réservoir, comprenant :
un réservoir (12 ; 30), et
un dispositif selon l'une quelconque des revendications 1 à 4.
